# EUROPEAN PATENT APPLICATION

(11) **EP 2 043 120 A1**
(43) Date of publication of application: **01.04.2009**
(21) Application number: 07790734.3
(22) Date of filing: 13.07.2007
(51) Int. Cl.: H01H 13/14, H01H 3/12, H01H 11/00, H01H 13/02

(54) **KEYTOP AND METHOD FOR MANUFACTURING THE SAME**

(30) Priority: 14.07.2006 JP 2006193626
(71) Applicant: Sunarrow Limited, Tokyo 104-0032 (JP)
(72) Inventor: WAKISAKA, Masatoshi, c/o Sunarrow Limited, Tokyo 104-0032 (JP)
(74) Representative: Vossius & Partner
(86) International application number: PCT/JP2007/063953
(87) International publication number: WO 2008/007761

(57) **Abstract**

A keytop 1 according to the present invention is used for a push button switch of a mobile phone. A reinforcing fiber layer is formed in an externally-visible state on at least one of a top surface, a back surface or an inner portion of a keytop body made of a resin material. The keytops are manufactured by pressing a laminating material of the sheet-shaped resin member and the sheet-shaped reinforcing fiber layer with a mold and molding the keytop bodies which are attached on the reinforcing fiber layer. By reinforcing the keytop bodies, the thin keytop bodies can be formed. Accordingly, it is possible to easily manufacture the keytops, to reduce production cost of the keytops, and to improve a design of the keytops.

## Description

### [FIELD OF THE INVENTION]

The present invention relates to a keytop used for a push button switch of a portable electronic apparatus such as a mobile phone or a personal digital assistance (PDA) or the like and a manufacturing method thereof and, more specifically, relates to a thin keytop and a manufacturing method thereof.

### Background Art

Generally, a portable electronic apparatus such as a mobile phone, a personal digital assistance or the like has a push button switch as an operating means. For example, a push button switch of a general mobile phone is constructed by attaching a plurality of keytops in a predetermined layout on a key base made of a thermoplastic elastomer such as a silicon rubber or the like.

Recently, more compact portable electronic apparatuses have been demanded. For the compact portable electronic apparatuses, there have been proposed techniques for implementing a small-sized or thin keytop constituting the push button switch. For example, in Japanese Patent Application Laid-Open No. 2006-108003 (Patent Document 1), there is disclosed a keytop (a cover member for a push button switch) which includes a base film having a keytop portion protruding upward and a keytop body (a core portion) formed in an inner side of the keytop portion, in which a bottom of the keytop body is formed to be higher in an upward direction than a bottom of the base film.

In such a conventional keytop, since the bottom of the keytop body is formed to be higher in the upward direction than the bottom of the base film, a position of a protrusion (a push member for contacting a connection point) provided on the bottom of the keytop body is shifted in the upward direction. As a result, a gap between the base film and a circuit board is narrowed, so that the thin portable electronic apparatus can be implemented.

Additionally, due to downsizing or thinning of the keytop, it becomes difficult to print highly skilled decoration such as various colors, letters, numerals, symbols, pictures or the like on a small-area keytop body (or a resin film covering the keytop body) by using a conventional screen or pad printing method. In order to solve such a problem, for example, in Japanese Patent Application Laid-Open No. 2002-197932 (Patent Document 2), there is disclosed a keytop (a sheet-shaped keytop) in which a graphic printing layer with multi-colored fine dots is formed between a keytop body and a translucent resin film by using a color printer.

In such a conventional keytop, since various colors, letters, geometric figures designs or the like can be integrally printed on the small-area portion by using a fine full color printing method with microprinting, it is possible to clearly display color gradation or color hues which are difficult to implement by using a conventional screen or pad printing method.

In addition, all these conventional keytops have been manufactured by using an injection molding method of injecting and filling a molten resin material in a mold and molding the core portion or the keytop body to be integrated into the base film or the transparent resin film.
[Patent Document 1] Japanese Patent Application Laid-Open No. 2006-108003
[Patent Document 2] Japanese Patent Application Laid-Open No. 2002-197932

However, in a keytop for a mobile phone, a keytop body made of resin materials e.g. polycarbonate, polyethylene terephthalate or the like needs to have various properties such as sufficient heat resistance, cold resistance, water resistance, and impact resistance. In such a conventional keytop, there is a limitation to implement a thin keytop body with the aforementioned properties satisfied.

More specifically, in the conventional keytop described above, a surface of each of the keytop body made of polycarbonate is coated with a synthetic resin film made of polycarbonate, polyester or polyimide with a thickness of 100 to 125 µm. The synthetic resin film increases the thickness of the keytop body, but it cannot reinforce the keytop at all. Therefore, there is a problem in that in a case where the thickness of the keytop body is reduced, a strength of the keytop body is weakened according to the reduction of the thickness.

In addition, in the conventional keytop, only the decoration using a graphic means such as screen printing, pad printing or microprinting by a color printer is used. Therefore, there is a problem in that even though any one of printing methods is used for decoration in a very small area of the keytop body, a fineness of design or the like can be only slightly changed, and a novelty of the decoration cannot be obtained. Moreover, although microprinting using the color printer is applied, a novel decoration capable of changing texture of the keytop body cannot be implemented.

In addition, in the injection molding as a method of manufacturing the aforementioned conventional keytops, there is a problem in that it is difficult to manufacture thin keytop bodies due to crack or defective appearance or the like caused from defective filling of the molten resin or occurrence of weld. In addition, in the portable electronic apparatus such as a mobile phone of which model is changed in a very short period, the molds with a high accuracy need to be prepared very frequently. Therefore, there is a problem in that production cost of the molds is increased.

### Disclosure of the Invention

In order to solve the aforementioned problems, an object of the present invention is to provide a keytop and a method of manufacturing the keytop, capable of implementing a thin keytop by reinforcing a keytop body and, as a result, capable of easily manufacturing the keytop, reducing production cost, and improving a design.

In order to achieve the object, according to an aspect of the present invention, there is provided a keytop used for a push button switch of a portable electronic apparatus, wherein a reinforcing fiber layer is formed in an externally-visible state on at least one of a top surface, a back surface or an inner portion of a keytop body made of a resin material.

According to one aspect of the present invention, there is provided a method of manufacturing a keytop, comprising: a process of arranging the reinforcing fiber layer having a sheet shape in a mold cavity; and a process of injecting a resin material having a fluidity in the mold cavity and molding the keytop bodies or the keytop body group in a state that the reinforcing fiber layer is attached thereto.

According to another aspect of the present invention, there is provided a method of manufacturing a keytop, comprising: a process of providing a resin material having a sheet shape and the reinforcing fiber layer having a sheet shape in a laminated state; a process of heating at least one of the laminating material of the resin material and the reinforcing fiber layer and a mold at a predetermined temperature; and a process of pressing the laminating material of the resin material and the reinforcing fiber layer with the mold and molding the keytop bodies or the keytop body group in a state that the reinforcing fiber layer is attached thereto.

According to still another aspect of the present invention, there is provided a method of manufacturing a keytop, comprising: a process of coating or impregnating a resin material on the reinforcing fiber layer having a sheet shape with a predetermined thickness; a process of curing the resin material to form a resin sheet member that is integrated into the reinforcing fiber layer; and a process of pressing the resin sheet member and molding the keytop bodies or the keytop body group.

### [Brief Description of the Drawings]

FIG. 1 is a perspective view of keytops according to a first embodiment of the present invention, in which FIG. 1(a) illustrates a plurality of keytops which are individually separated, and FIG. 1(b) illustrates a keytop sheet in a state that a plurality of the keytops are connected to each other in a reinforcing fiber layer.
FIG. 2 is a flowchart illustrating processes of each method of manufacturing the keytop according to the first embodiment of the present invention.
FIGS. 3(a) to 3(g) are schematic views illustrating processes of the method of manufacturing the keytop.
FIGS. 4 (a) to 4(d) are cross-sectional views illustrating an injection molding process in the method of manufacturing the keytop.
FIG5 is a view illustrating of keytops according to a second embodiment of the present invention, in which FIG. 5(a) is a plan view, FIGS. 5(b) and 5(c) are cross-sectional views taken along line A-A of FIG. 5(a), wherein FIG. 5(b) corresponds to a configuration in a case where a reinforcing fiber layer is provided on a top surface of a keytop body, and FIG. 5(c) corresponds to a configuration in a case where the reinforcing fiber layer is provided on a back surface of the keytop body.
FIG. 6 is a flowchart illustrating processes of each method of manufacturing the keytop according to the second embodiment of the present invention.
FIGS. 7(a) to 7(i) are schematic views illustrating processes of the method of manufacturing the keytop.
FIGS. 8 (a) to 8(d) are cross-sectional views illustrating a pressing process in the method of manufacturing the keytop.
FIG. 9 is a view illustrating keytops and a method of manufacturing the keytop according a third embodiment, in which FIG. 9(a) is a cross-sectional view illustrating a sheet-shaped member in which a resin material is coated on or impregnated in a reinforcing fiber layer, FIG. 9(b) is a cross-sectional view illustrating a plurality of keytops obtained by performing a punching process on the resin sheet member of FIG. 9(a), and FIG. 9(c) is a cross-sectional view illustrating a keytop sheet obtained by performing a pressing process on the resin sheet member of FIG. 9(a).

### Detailed Description of the Invention

### General Description

A keytop according to an embodiment of the present invention is used for a push button switch of a portable electronic apparatus. The keytop has a constitution that a reinforcing fiber layer is provided in an externally-visible state on at least one of a top surface, a back surface or an inner portion of a keytop body made of a resin material.

According to such a constitution, the keytop body is reinforced with the reinforcing fiber layer made of a woven fabric or an unwoven fabric, so that a thin keytop body can be implemented. In addition, since such a thin keytop body can be implemented, the keytop can be manufactured by pressing the sheet-shaped resin member, so that it is possible to easily manufacture the keytop and to reduce production cost.

In addition, since the reinforcing fiber layer is provided in the externally-visible state on the keytop body, the keytop can be provided with texture of a fabric which is very different from those of a conventional printing or painting method, so that it is possible to improve a design of the keytops.

As a fiber material for forming the reinforcing fiber layer, all the natural or synthetic fibers capable of reinforcing the keytop body can be used. Particularly, in terms of the effect of reinforcing the keytop, a high-strength fiber such as a carbon fiber, Kevlar (registered trademark), and a glass fiber can be used. In addition, in terms of a design of the keytop, a dyed fabric, a mixed fabric, a blended fabric, or other organic fibers having a high degree of freedom such as a polyester fiber, an acryl fiber, a polyethylene fiber, a polypropylene fiber, a polyurethane fiber, a polyimide fiber, and a morpho fiber (a fiber with polyester and nylon (registered trademark) laminated)) or the like can be used. In addition, if the reinforcing fiber layer can be formed on a top surface or a back surface or in an inner portion of the keytop body, the reinforcing fiber layer can be formed in any type of a woven fabric, an unwoven fabric, or a cut fiber.

In addition, the "externally-visible" state of the reinforcing fiber layer means a state that the reinforcing fiber layer can be an outer component of the keytop. For example, the "externally-visible" state may include a state that the reinforcing fiber layer is provided on the top surface of the keytop body, a state that the reinforcing fiber layer is provided on a back surface or in an inner portion of a colorless or colored transparent keytop body, and a state that the reinforcing fiber layer is provided on a back surface or in an inner portion of a keytop body having an opening, a through-hole, or a punched portion.

Preferably, the plurality of keytop bodies are arranged in a predetermined layout on the reinforcing fiber layer having a sheet shape.

According to such a constitution, in case of a push button switch of a mobile phone, for example, where the plurality of keytops are arranged in a predetermined layout, a number of the keytops are simultaneously can be molded in a predetermined layout, and after that, a number of the keytops can be treated integrally in the following processes. Therefore, it is possible to efficiently manufacture the keytops and assemble the push button switch.

In addition, with respect to the keytop according to the embodiment of the present invention, each of the keytop bodies can be individually operated in a connected state due to a flexibility of the reinforcing fiber layer. Each of the keytop bodies can be assembled into the push button switch in the state that the keytop bodies are connected to each other with the reinforcing fiber layer. In addition, since the reinforcing fiber layer can be cut, the keytops can be individually separated from each other.

Preferably, a keytop body group is constructed by integrally arranging the plurality of keytop bodies in a predetermined layout on a flexible resin sheet, and the reinforcing fiber layer having a sheet shape is provided on the keytop body group.

According to such a constitution, the plurality of keytops are integrally arranged in a predetermined layout to form a keytop sheet. Similarly to the aforementioned case, a number of the keytops can be treated integrally in the following processes, so that it is possible to efficiently manufacture the keytops and the push button switch.

In addition, when each of the keytops can be individually operated due to the flexibility of the resin sheet or the slit formed in the resin sheet, the keytop body group can be used in the state that the keytop body group is assembled into the push button switch directly without separation of the keytop body group into the individual keytops.

Preferably, the keytop bodies or the keytop body group and the reinforcing fiber layer have a translucency.

According to such a constitution, since the keytop body or the keytop body group has a translucency, even in a case where the reinforcing fiber layer is provided on a back surface or in an inner portion of the keytop body or the keytop body group, the reinforcing fiber layer can be in the externally-visible state. In addition, since the keytop body or the keytop body group and the reinforcing fiber layer can have a translucency, in case of a mobile phone using the keytops as the push button switch, the numeral displays can be lightened to be seen by illuminating from the back surface of the keytops.

Here, the "translucency" of the keytop body or the keytop body group denotes a case where, when a reinforcing fiber layer is provided on a back surface or in an inner portion of the keytop body or the keytop body group, the reinforcing fiber layer can be in an externally-visible state. For example, a case where the keytop body or the keytop body group is made of a colorless, colored transparent or semitransparent resin material is included. In addition, the reinforcing fiber layer, even in any type of a woven fabric, an unwoven fabric or a cut fiber is considered to have a translucency basically since there are generally fine gaps between fibers. In addition, the keytop body or the keytop body group may be entirely or partially provided with the translucency. For example, the translucency may be provided to displays such as numerals, letters, symbols or the like of the keytop. Inversely, the translucency may be provided to portions except the displays.

Preferably, a pattern is printed on the reinforcing fiber layer.

According to such a constitution, texture of a fabric can be provided to the keytop, and highly skilled decoration such as various types of letters, numerals, symbols, geometric figures, pictures or the like can be printed on the keytop by using a conventional printing method, so that it is possible to greatly improve a design of the keytop.

Here, the "pattern" printed on the reinforcing fiber layer includes a point, a line, a figure, color division, or any one that is considered to be a figure in terms of a socially accepted idea. In addition, the "pattern" includes all the displays irrespective of their necessities with respect to functions of the portable electronic apparatus. For example, undersigned or undecorated letters, numerals or symbols which are to be used for decorating the keytop are widely included in the "pattern".

In order to achieve the aforementioned object, in an embodiment of a method of manufacturing a keytop according to the present invention, a method of manufacturing any one of the aforementioned keytops includes a process of arranging the reinforcing fiber layer having a sheet shape in a mold cavity and a process of injecting a resin material having a fluidity in the mold cavity and molding the keytop bodies or the keytop body group in a state that the reinforcing fiber layer is attached thereto.

According to such a method, by injection molding, in which the reinforcing fiber layer is inserted, the keytop body or the keytop body group is molded, and at the same time, the reinforcing fiber layer can be easily integrated on a top surface or a back surface of the keytop body or the keytop body group, so that it is possible to efficiently manufacture the keytop according to the present invention.

In the embodiment, the injection molding includes a case where a heat-flown resin material is injected in a mold and cooled to be cured, a case where a thermosetting resin material is injected in a mold and heated to be cured, and a case where light-cured such as UV-cured resin material is injected in a mold and cured by light illumination.

In order to achieve the aforementioned object, in another embodiment of a method of manufacturing a keytop according to the present invention, a method of manufacturing any one of the aforementioned keytops includes a process of providing a resin material having a sheet shape and the reinforcing fiber layer having a sheet shape in a laminated state each other, a process of heating at least one of the laminating material of the resin material and the reinforcing fiber layer and a mold at a predetermined temperature, and a process of pressing the laminating material of the resin material and the reinforcing fiber layer with the mold and molding the keytop bodies or the keytop body group in a state that the reinforcing fiber layer is attached thereto.

According to such a method, as a result of implantation of the thin keytop bodies or of the keytop body group by using the reinforcing fiber layer, the keytop pressing process can be performed. Therefore, the keytop bodies or the keytop body group is molded, and at the same time, the reinforcing fiber layer can be easily integrated on a top surface or a back surface of the keytop bodies or the keytop body group. Accordingly, it is possible to easily manufacture the keytops and to reduce production cost.

For example, a series of processes of supplying a sheet-shaped resin material and a fiber material, laminating these materials, heating the resin material, pressing, decorating the keytops, separating the keytops or the like in a production line can be consecutively performed, so that mass production of the keytops can be efficiently implemented. In addition, since the pressing process does not require such a high accuracy as that of the injection molding, it is possible to reduce the production cost.

In order to achieve the aforementioned object, in an embodiment of a method of manufacturing a keytop according to the present invention, a method of manufacturing any one of the aforementioned keytops includes a process of coating or impregnating a resin material with a predetermined thickness on the reinforcing fiber layer having a sheet shape; a process of curing the resin material to form a resin sheet member that is integrated into the reinforcing fiber layer; and a process of pressing the resin sheet member with a mold and molding the keytop bodies or the keytop body group.

According to such a method, the keytop pressing process can be performed, and the reinforcing fiber layer can be provided in an inner portion of the keytop body or the keytop body group by coating or impregnating the resin material on the reinforcing fiber layer, so that it is possible to protect the reinforcing fiber layer from external impact during the manipulation of the keytop. Accordingly, a durability and design of the keytop can be maintained for a long time of using the portable electronic apparatus.

Preferably, in any one of the aforementioned embodiments, the method further includes a process of separating the keytop body group which is attached or integrated into the reinforcing fiber layer into the individual keytop body to obtain the plurality of keytops.

According to such a method, the plurality of keytop bodies are treated as a keytop body group which are integrally arranged in a predetermined layout, work efficiency can be greatly improved in such a process performed after the molding of the resin material as a process of decorating individual keytops, a resin coating process and a process assembling a push button switch. Finally, when the keytop body group is separated into individual keytop bodies, the plurality of keytops can be efficiently manufactured.

### Effect of the Invention

According to a keytop and a method of manufacturing the keytop of the embodiments of the present invention, it is possible to implement a thin keytop body by reinforcing the keytop body with a reinforcing fiber layer. In addition, since the thin keytop body can be implemented, a keytop can be manufactured by performing a pressing process on a sheet-shaped resin member, so that it is possible to easily manufacture the keytop and to reduce production cost. In addition, the reinforcing fiber layer can be provided in an externally-visible state in the keytop body, so that the keytop can be provided with texture of a fabric which is very different from conventional printing or painting. Accordingly, it is possible to improve a design of the keytops.

### Description of the Exemplary Embodiments

Hereinafter, a keytop and a method of manufacturing the keytop according to embodiments of the present invention are described with reference to the accompanying drawings.

### <<First Embodiment>>

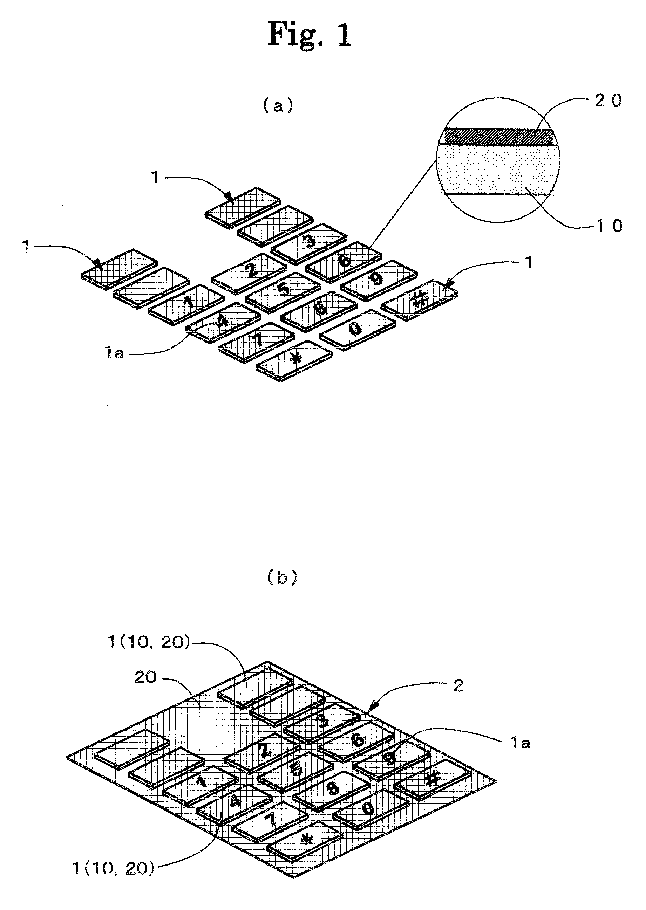

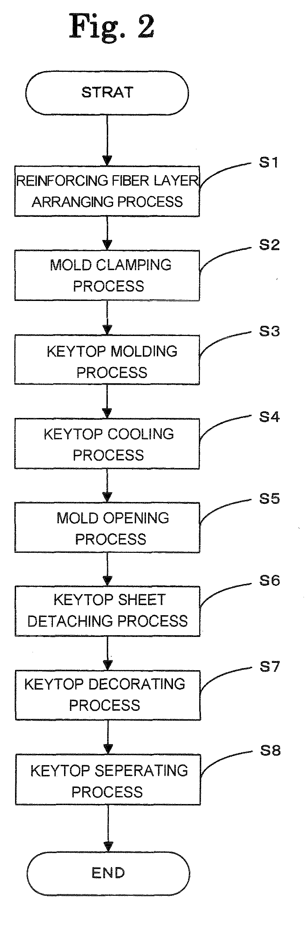

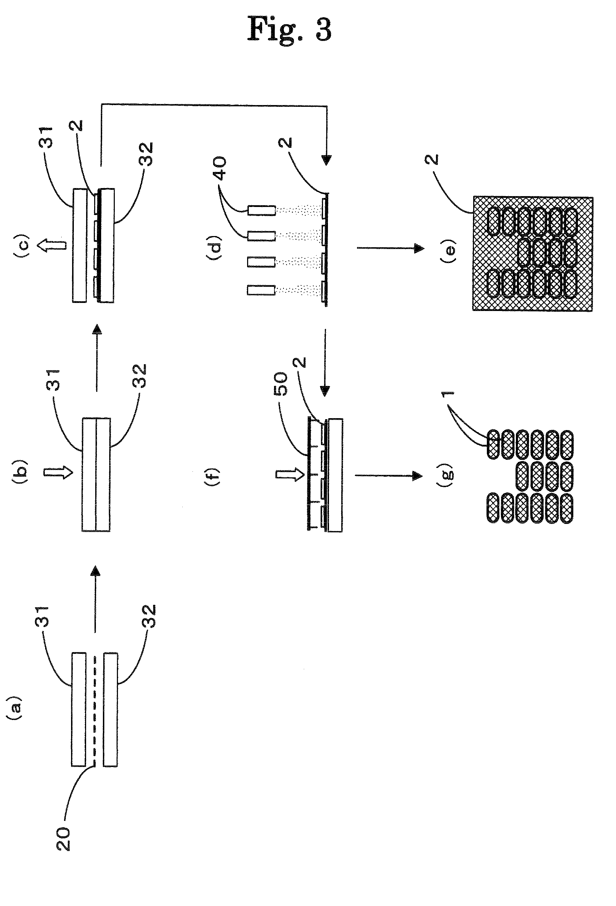

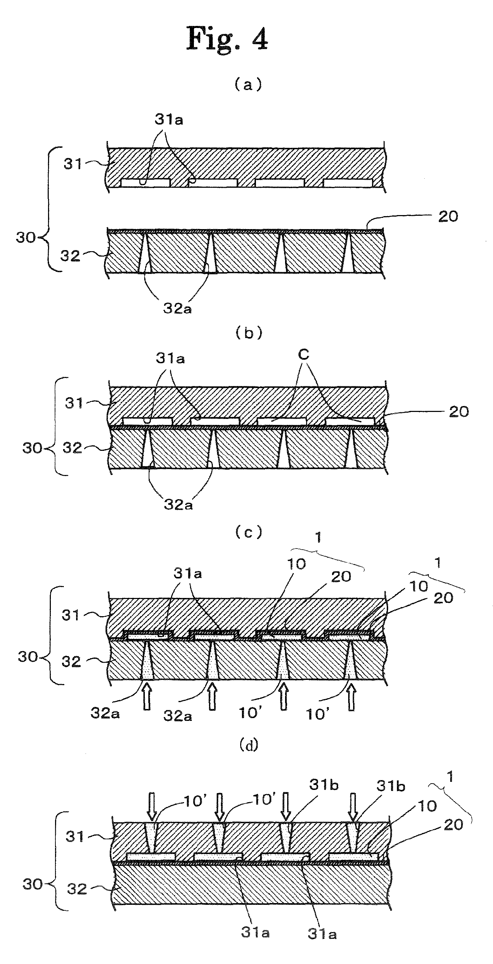

Firstly, a keytop and a method of manufacturing the keytop according to a first embodiment of the present invention are described with reference to FIGS. 1 to 4. FIG. 1 is a perspective view of keytops according to the first embodiment of the present invention, in which FIG. 1 (a) illustrates a plurality of keytops which are individually separated, and FIG. 1 (b) illustrates a keytop sheet in a state that the plurality of keytops are connected to each other in a reinforcing fiber layer. FIG. 2 is a flowchart illustrating each process of a method of manufacturing the keytop according to the first embodiment of the present invention. FIGS. 3(a) to 3(g) are schematic views illustrating each process of the method of manufacturing the keytop. FIGS. 4(a) to 4(d) are cross-sectional views illustrating a process of an injection molding process in the method of manufacturing the keytop.

### <Construction of Keytop>

As shown in FIG. 1(a), a keytop 1 according to the embodiment is used for a push button switch of a mobile phone, for example, and has a constitution where a reinforcing fiber layer 20 is provided on a top surface of a keytop body 10 made of a resin material. In addition, numerals, alphabets, symbols, or other displays 1a are decorated on the surfaces of the keytops 1.

A resin material used for forming the keytop body 10 is not limited to specific one. For example, a polycarbonate resin, an acryl resin, a styrene resin, an olefin resin, or modified resins thereof may be used.

In addition, it is preferable that the keytop body 10 is formed of a resin material having a translucency so that the displays 1a is lightened to be in a visible state by illuminating the keytop 1 from the back surface of the keytop 1. As a resin material having a translucency, a polypropylene resin, a polymethyl methacrylate resin, a polyethylene terephthalate resin, a polybutylene terephthalate resin, a polystyrene resin, polycarbonate resin, a polyimide resin, and a polyacrylonitrile butadiene styrene resin or the like may be used. Particularly, a polycarbonate resin having a good impact resistance is suitable used.

Meanwhile, the reinforcing fiber layer 20 reinforces the keytop body 10 to enable implementation of a thinner keytop 1 and to provide fabric appearance and texture to the keytop 1 so as to improve the design thereof. By providing the reinforcing fiber layer 20, it is possible to reduce a thickness of the keytop body 10 down to a range of 0.2 to 0.6 mm and to improve strength thereof.

As a fiber material for forming the reinforcing fiber layer, all the natural or synthetic fibers having a heat resistance that the reinforcing fiber layer is not deformed at a molding temperature of the keytop body 10 and capable of reinforcing the keytop body can be used. Particularly, in terms of the effect of reinforcing the keytop 10, a high-strength fiber such as a carbon fiber, Kevlar (registered trademark), and a glass fiber or the like can be used.

In addition, in terms of a design of the keytop, a dyed fabric, a mixed fabric, a blended fabric, or other organic fibers having a high degree of freedom such as a polyester fiber, an acryl fiber, a polyethylene fiber, a polypropylene fiber, a polyurethane fiber, a polyimide fiber, a morpho fiber or the like can be used. In addition, a natural fiber having a sufficient heat resistance suitable for processes and a good texture such as a silk, an arboreous cotton, and a hemp may be used.

In addition, if the reinforcing fiber layer 20 can be formed on a top surface or a back surface or in an inner portion of the keytop body 10, the reinforcing fiber layer may be formed in any type of a woven fabric, an unwoven fabric, or a cut fiber.

If the reinforcing fiber layer 20 can be in an externally-visible state, the reinforcing fiber layer may be provided in any site of the top surface, the back surface, or the inner portion of the keytop body 10. In addition, as a method of providing the reinforcing fiber layer 20 in the keytop body 10, any one among a method of welding the resin material on the reinforcing fiber layer 20 at the time of molding the keytop body 10, a method of adhering sheet-shaped materials which become the keytop body 10 and the reinforcing fiber layer 20 with an adhesive in advance, and a method of coating or impregnating a resin material (to be the keytop body 10) on a sheet-shaped material which become the reinforcing fiber layer 20 may be employed.

In addition, since a fabric material used for clothes or ornamental accessories may be widely used as the reinforcing fiber layer 20, it is possible to further improve the design of the keytop 1 by forming decorative texture, color, figure, picture or the like on the reinforcing fiber layer 20.

In addition, in the following molding process, the keytops 1 shown in FIG. 1(a) are integrally molded in a connected state in a predetermined layout on the sheet-shaped reinforcing fiber layer 20 shown in FIG. 1(b) (the resulting product is referred to as a "keytop sheet 2"). According to a constitution of the push button switch (not shown) which the keytops 1 are assembled into, the reinforcing fiber layer 20 are cut, so that the keytops 1 are individually separated.

On the other hand, the keytops 1 in the state of the keytop sheet 2 can be individually pushed and operated due to the flexibility of the reinforcing fiber layer 20, the keytops 1 in the state of the keytop sheet 2 can be assembled into and used for the push button switch.

### <Method of Manufacturing Keytop>

In the next place, a method of manufacturing the aforementioned keytop 1 or keytop sheet 2 is described with reference to FIGS. 2 to 4. In the embodiment, the reinforcing fiber layer 20 is inserted into a mold 30, and the keytop body 10 is molded by performing an injection molding process.

As shown in FIG. 4(a), the mold 30 used in the embodiment includes an upper mold 31 and a lower mold 32. The upper mold 31 is of a moving type and connected to a driving means (not shown) such as a hydraulic cylinder. A plurality of mold facets 31a for molding the keytops 1 are formed on the upper mold 31. On the other hand, the lower mold 32 is of a fixed type and has a plurality of gates 32a corresponding to the mold facets 31a of the upper mold 31. Injection cylinders (not shown) for supplying a heat-molten resin material 10' (see FIG. 4(c)) are connected to the upstream of the gates 32a.

### [Reinforcing Fabric Layer Arranging Process]

Firstly, as shown in FIG. 3(a), in a state that the mold 30 is opened, the reinforcing fiber layer 20 is arranged on a flat mold surface of the lower mold 32 (Step S1 of FIG. 2). Details thereof are shown in FIG. 4(a). Each of the mold facet 31a of the upper mold 31 is located over the reinforcing fiber layer 20 arranged on the lower mold 32, and each of the gates 32a of the lower mold 32 is located under the reinforcing fiber layer. The reinforcing fiber layer 20 is positioned so that the textures, the designs, the figures the pictures or the like are located at predetermined positions of each of the mold facets 31a of the upper mold 31.

### [Mold Clamping Process]

In the next place, as shown in FIG. 3(b), the upper mold 31 is operated by the driving means (not shown), and the upper mold 31 and lower mold 32 are clamped in the state that the mold surface of the upper mold and the mold surface of the lower mold face each other (Step S2 of FIG. 2). Details thereof are shown in FIG. 4(b). By the mold clamping, a plurality of cavities C for molding the keytops 1 are formed, and the reinforcing fiber layer 20 is partially inserted into each of the cavities C.

### [Keytop Molding Process]

As shown in FIG. 4(c), in this state, a resin material 10' which is heated and molten in advance is injected (Step S3 of FIG. 2). The injected resin material 10' is transferred through a spruce and runner (not shown) and filled up from each of the gates 32 of the lower mold 32 into the cavities C with a high pressure. In this manner, the reinforcing fiber layer 20 and the resin material 10' are molded in a predetermined shape in each of the cavities C, so that the plurality of keytop bodies 10 are formed in a predetermined layout in the state that the keytop bodies are contained in the back surface of the sheet-shaped reinforcing fiber layer 20. Each of the keytop bodies 10 and some portions of the reinforcing fiber layer 20 containing the keytop bodies form the plurality of keytops 1, and the keytops 1 and the reinforcing fiber layer 20 form the keytop sheet 2 as a whole.

In general, in a case where the keytop body 10 is molded with a polycarbonate resin, a limitation to the thickness of the keytop body 10 is about 0.5mm, that is, a management value. However, according to the embodiment, since the keytop body 10 is reinforced with the reinforcing fiber layer 20, even in a case where the keytop body 10 is formed with a small thickness of about 0.2mm, the keytop body 10 can be formed to have a sufficient strength.

### [Keytop Cooling Process, Mold Opening Process, Keytop Sheet Detaching Process]

In the next place, the mold product in the mold 30 is cooled sufficiently (Step S4 of FIG. 2), and as shown in FIG. 3(c), the mold is opened by moving the upper mold 32 in the mold-opening direction (Step S5 of FIG. 2). And, ejecting pins (not shown) built in the upper mold 31 are operated to detach the keytop sheet 2 (Step S6 of FIG. 2).

### [Keytop Decorating Process]

In the next place, as shown in FIG. 3(d), the detached keytop sheet 2 is transferred to a surface printing device 40 by a robot hand or a conveyer (not shown). The surface printing device 40 prints numerals, alphabets, symbols, or other displays 1a (see FIG. 1) required for manipulation of the mobile phone on surfaces of the keytops 1 (Step S7 of FIG. 2). In the keytop decorating process, various printing methods such as a laser printing method, a silk screen printing method, an inkjet printing method or the like can be used.
In the keytop decorating process, patterns or designs irrelevant to functions of the mobile phone may be printed on the top surface or the back surface of the sheet-shaped reinforcing fiber layer 20. In addition, in the keytop decorating process, except for a case where the reinforcing fiber layer is formed with a fiber having a good abrasion resistance and a case where a tactile impression of the fiber is maintained, a UV coating process may be performed so as to prevent damage, discolorization, and deterioration of the reinforcing fiber layer 20.

When the keytop decorating process is completed, a process of cutting the decorated keytop sheet 2 to separate the individual keytops 1 proceeds (see FIG. 3(f)). As described above, in a case where the keytops 1 in the keytop sheet 2 can be assembled into the push button switch to be used, the manufacturing of keytops are completed at the keytop decorating process (see FIG. 3(e)).

### [Keytop Separating Process]

In a case where a plurality of individually separated keytops 1 are manufactured, as shown in FIG. 3(f), the decorated keytop sheet 2 is transferred to a punching device 50 by a robot hand or the like (not shown). The punching device 50 cuts the reinforcing fiber layer 20 at once so as to separate the individual keytops 1 of the keytop sheet 2 as shown in FIG. 3(g) (Step S8 of FIG. 2).
In this manner, one set of the keytops 1 which is assembled into the push button switch of a mobile phone is manufactured.

### <Effect>

In the keytops 1 or the keytop sheet 2 according to the first embodiment of the present invention, the keytop body 10 can be reinforced with the reinforcing fiber layer 20 made of a woven fabric or an unwoven fabric, so that it is possible to implement thin keytops and a thin keytop sheet.

Since the reinforcing fiber layer 20 is provided in the externally-visible state on the keytop body 10, the keytops 1 can be provided with texture of a fabric which is very different from those of a conventional printing or painting, so that it is possible to improve a design of the keytops 1.

In addition, since the keytop sheet 2 is formed by arranging the plurality of keytop bodies 10 in a predetermined layout on the sheet-shaped reinforcing fiber layer 20, the plurality of keytops 1 can be simultaneously formed in a predetermined layout, and after that, the plurality of keytops 1 can be treated integrally in the following processes (Steps S6 and S7 of FIG. 2). Therefore, it is possible to efficiently manufacture the keytops 1 and assemble the push button switch.

Meanwhile, in the method of manufacturing the keytops 1 according to the first embodiment of the present invention, by performing the injection molding process in which the reinforcing fiber layer 20 is inserted, the keytop body 10 is molded, and at the same time, the reinforcing fiber layer 20 can be easily integrated on the surface thereof, so that it is possible to efficiently manufacture the keytops 1 according to the present invention.

In the methods of manufacturing the keytops 1 by using the aforementioned injection molding, the reinforcing fiber layer 20 is welded on the surfaces of the keytop bodies 10, but the present invention is not limited thereto. For example, as shown in FIG. 4(d), the resin material 10' is injected and filled into each of the cavities C from the side of the mold facets 31a of the upper mold 31, so that the reinforcing fiber layer 20 may be welded on the back surfaces of the keytop bodies 10. According to such a constitution, textures or the like of the reinforcing fiber layer 20 can be in the externally-visible state through the keytop bodies 10 having a translucency, and a UV coating layer for protecting the reinforcing fiber layer 20 is not needed.

### <<Second Embodiment>>

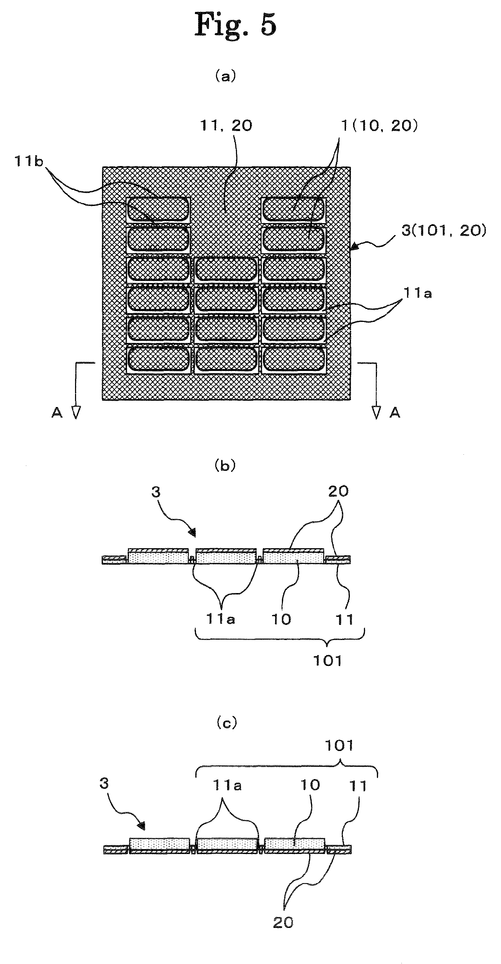

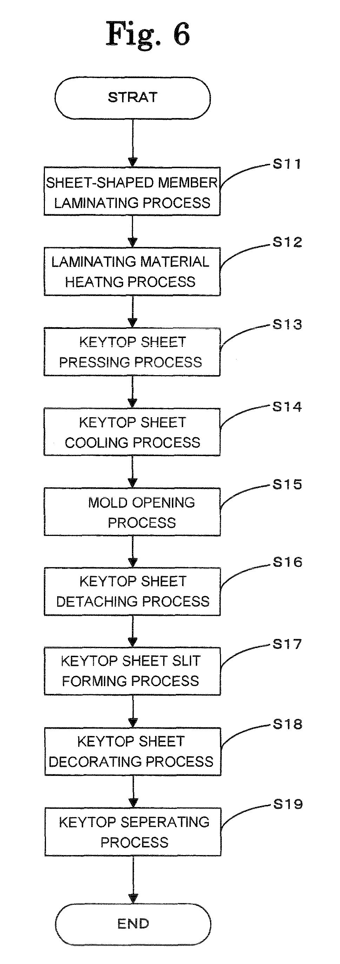

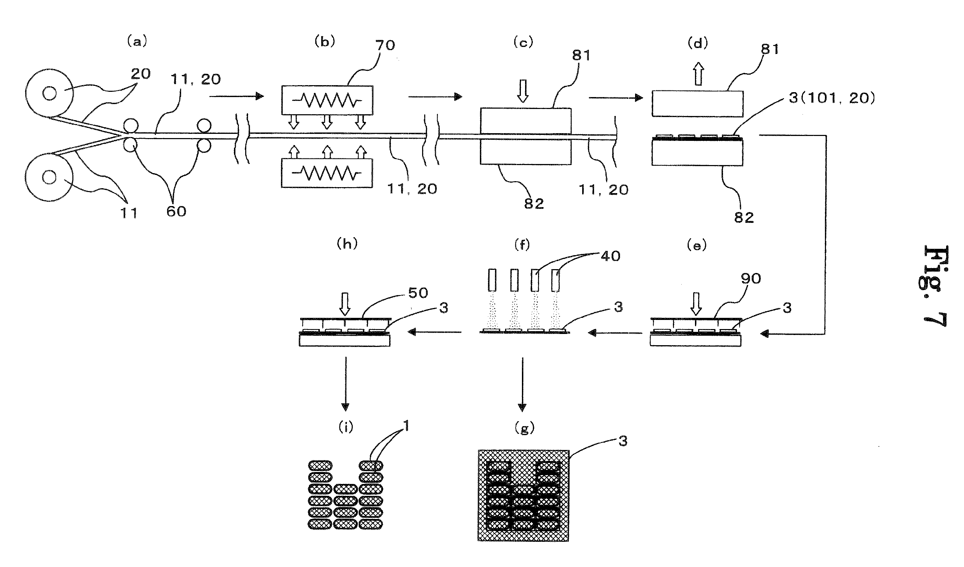

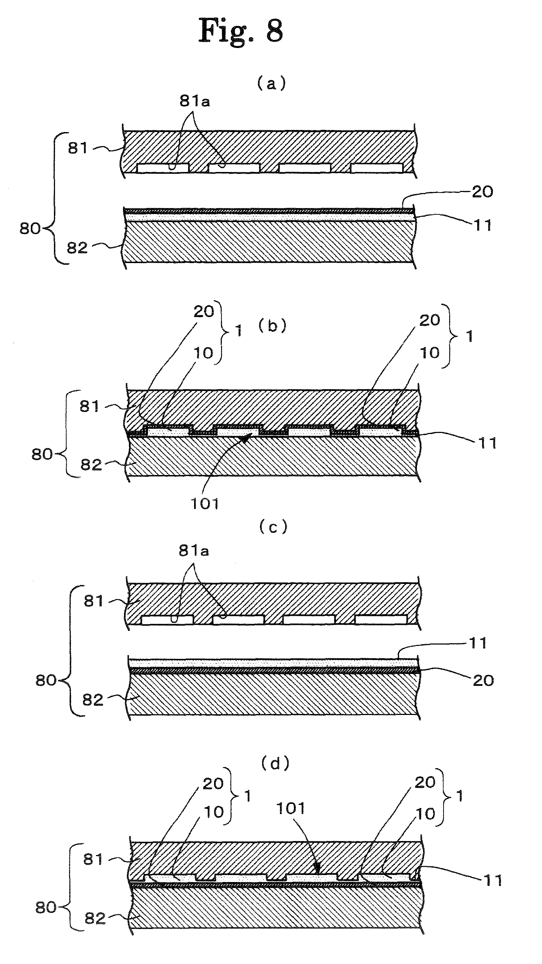

In the next place, a keytop and a method of manufacturing the keytop according to a second embodiment of the present invention are described with reference to FIGS. 5 to 8. FIG5 is a view illustrating of keytops according to the second embodiment of the present invention, in which FIG. 5(a) is a plan view, FIGS. 5(b) and 5(c) are cross-sectional views taken along line A-A of FIG. 5(a), wherein FIG. 5(b) corresponds to a case where a reinforcing fiber layer is provided on a top surface of a keytop body, and FIG. 5(c) corresponds to a case where the reinforcing fiber layer is provided on a back surface of the keytop body. FIG. 6 is a flowchart illustrating each process of a method of manufacturing the keytop according to the second embodiment of the present invention. FIGS. 7(a) to 7(i) are schematic views illustrating each process of the method of manufacturing the keytop. FIGS. 8(a) to 8(d) are cross-sectional views illustrating a pressing process in the method of manufacturing the keytop.

In the embodiment, similar elements of the first embodiment are denoted by like reference numerals, and detailed description thereof is not repeated.

### <Construction of Keytop>

Similarly to the first embodiment, as shown in FIG. 6(a), a keytop sheet 3 according to the embodiment is used for a push button switch of a mobile phone. However, unlike the first embodiment, the keytop sheet 3 according to the embodiment includes a keytop body group 101 in which a plurality of keytop bodies 10 are integrally molded in a predetermined layout on a thin resin sheet 11 having a flexibility. A reinforcing fiber layer 20 is provided on a top surface (see FIG. 6(b)) or a back surface (see FIG. 6(c)) of the keytop body group 101. Each of the keytop bodies 10 which is reinforced with the reinforcing fiber layer 20 forms the keytop 1 shown in FIG. 1(a).

As described later, each of the keytop bodies 10 of the keytop body group 101 is formed by performing a pressing process on the resin sheet 11. In order that each of the keytops 1 connected with the resin sheet 11 can be smoothly pushed, substantially U-shaped slits 11a as seen in a plan view are formed along three sides of each of the keytop bodies 10 by punching. Accordingly, each of the keytops 1 can be pushed smoothly by using a connection portion 11b of the remaining side as a supporting axis.

Other constitutions are substantially the same as those of the first embodiment. The keytop body group 101 is made of such a resin material having a good impact resistance and a translucency as polycarbonate or the like. A decorative texture, color, pattern, picture or the like can be formed on the reinforcing fiber layer 20, so that the design of the resulting keytops 1 or keytop sheet 3 can be improved.

The aforementioned keytop sheet 3 may be used as assembled into the push button switch as one piece. Alternatively, the shape of the keytop sheet 3 may be maintained in each of the manufacturing processes, so that the treatment or processes can be easily performed. In the final process, all the connection portions 11b may be cut to separate into the individual keytop 1 as shown in FIG. 1(a).

### <Method of Manufacturing Keytop>

In the next place, a method of manufacturing the aforementioned keytop 1 or keytop sheet 3 is described with reference to FIGS. 6 to 8. In the embodiment, a pressing process is performed on a resin sheet 11 having a sheet shape and a reinforcing fiber layer having a sheet shape in a laminated state thereof so as to manufacture the keytop sheet 3.

### [Sheet-Shaped Member Stacking Process]

As shown in FIG. 7(a), a roll of the reinforcing fiber layer 20 and a roll of the resin sheet 11 are placed to the uppermost stream of a production line. The reinforcing fiber layer 20 and the resin sheet 11 provided from these rolls are put between a plurality of rollers 60 to be laminated, and be subsequently provided to downstream devices of the production line (Step S11 of FIG. 6).

In the embodiment, in the laminating process, the reinforcing fiber layer 20 is laminated on the resin sheet 11. However, the present invention is not limited thereto. The reinforcing fiber layer 20 may be laminated below the resin sheet 11. In the former case, the keytop sheet 3 shown in FIG. 5(b) is finally formed, and in the latter case, the keytop sheet 3 shown in FIG. 5(c) is finally formed.

### [Laminating Material Heating Process]

In the next place, as shown in FIG. 7(b), the laminating material of the reinforcing fiber layer 20 and the resin sheet 11 is transferred to a heating device 70, and the laminating material is heated up to a softened state (Step S12 of FIG. 6). As the heating device 70, various heaters using an electric heater, an infrared halogen lamp or the like as a heat source may be used, and any one of resin-sheet contact and non-contact type heating may be used. The reinforcing fiber layer 20 is not necessarily heated. In this case, for example, the heating device 70 may be arranged between the roll of resin sheet 11 and the transfer roller 60 shown in FIG. 7(a).

A heating temperature of the heating device 70 is varied according to a thickness of the resin sheet 11. For example, in a case where the resin sheet 11 is a polycarbonate resin having a thickness of about 1mm, the heating temperature may be about 132°C (1.81MPa), that is, a thermal deformation temperature (heat distortion temperature) thereof. In order to sufficiently soften the resin sheet 11, the heating temperature and time of the heating device 70 are controlled according to a material, a thickness, a width or the like of the resin sheet 11.

In addition, while the resin sheet 11 is softened, the reinforcing fiber layer 20 may be welded in the heating process, by using a heating device 70 which tucks down the reinforcing fiber layer 20 and the resin sheet 11 and heats them. Upper and lower pressing dies 81 and 82 (see FIG. 7(c)) used for the following pressing process may be used as a heating device, so that the heating and pressing processes may be integrated into a single process.

### [Keytop Sheet Pressing Process]

In the next place, as shown in FIG. 7(c), the reinforcing fiber layer 20 and the heat-softened resin sheet 11 are transferred between the upper and lower pressing dies 81 and 82. The reinforcing fiber layer 20 and the resin sheet 11 arranged on the lower pressing die 82 is pressed by the upper pressing die 81 (Step S13 of FIG. 6).

As shown in FIG. 8(a), a plurality of dies facets 81a are provided on the upper pressing die 81 for individually molding the keytops 1. When the upper pressing die 81 is moved down to the lower pressing die 82, the die facets 81a are pressed on the reinforcing fiber layer 20 and the heat-softened resin sheet 11.

As a result, as shown in FIG. 8(b), a keytop body group 101 in which the plurality of keytop bodies 10 are arranged in a predetermined layout is formed on the thin resin sheet 11 pressed by surfaces excluding each of the die facets 81a of the upper die 81, and the reinforcing fiber layer 20 is integrally welded along the convex-concave shape of the surface of the keytop body group 101. Namely, the keytop sheet 3 having the plurality of keytops 1 shown in FIG. 5(b) is pressed.

Similarly to the first embodiment described above, when the keytop body 10 is molded of a polycarbonate resin, the thickness of each of the keytop body 10 can be lowered down to about 0.2mm. In addition, since the keytop body 10 is reinforced with the reinforcing fiber layer 20, the thin keytop body 10 can be formed to have a sufficient strength.

In a case where the reinforcing fiber layer 2 is laminated below the resin sheet 11 0 in the aforementioned sheet-shaped member laminating process (see Step S11 of FIG. 7(a)), the keytop sheet pressing process becomes those shown in FIGS. 8(c) and 8(d).

In the figures, when the upper pressing die 81 is moved down to the lower pressing die 82, only the resin sheet 11 is pressed which is heat-softened on the die facets 81a of the upper pressing die 81. Accordingly, the keytop body group 101 in which the plurality of keytop bodies 10 are formed on the thin resin sheet 11 is produced, and the reinforcing fiber layer 20 is integrally welded on the flat back surface of the keytop body group 101. Namely, the keytop sheet 3 having the plurality of keytops 1 shown in FIG. 5(c) is obtained by the pressing process.

### [Keytop Sheet Cooling Process]

In the keytop sheet pressing process for the keytop sheet 3 (Step S13) aforementioned above, a temperature of the upper and lower pressing dies 81 and 82 is set to about 80°C. The temperature is lower than that of the heat-softened resin sheet 11 in the laminated structure heating process (Step S12). Therefore, until a predetermined curing time of the pressed keytop body group 101 elapses, the pressing state of the upper pressing die 81 is maintained, so that the pressed keytop sheet 3 is cooled to be cured (Step S14 of FIG. 6).

### [Mold Opening Process, Keytop Sheet Detaching Process]

Subsequently, as shown in FIG. 7(d), the upper pressing die 81 is moved in the die-opening direction to be opened (Step S15 of FIG. 6). And, ejecting pins (not shown) built in the upper die 81 are operated to detach the keytop sheet 3 (Step S16 of FIG. 6).

### [Keytop Sheet Slit Forming Process]

In the next place, as shown in FIG. 7(e), the detached keytop sheet 3 is transferred to a punching die 90 by a conveyer or a robot hand or the like (not shown). By using the punching die 90, substantially U-shaped slits 11a (see FIG. 5(a)) are formed along three sides of each of the keytops 1 of the keytop sheet 3 (Step S17 of FIG. 6).

### [Keytop Sheet Decorating Process]

In the next place, as shown in FIG. 7(f), the keytop sheet 3 having the punched slits 11a is transferred to a surface printing device 40 by a conveyer or the like (not shown). The surface printing device 40 prints numerals, letters, symbols, or other displays 1a (see FIG. 1) required for manipulation of the mobile phone on surfaces of each of the keytops 1 (Step S18 of FIG. 6).

Similarly to the first embodiment, in the keytop decorating process, patterns designs or the like irrelevant to functions of the mobile phone may be printed on the top surface or the back surface of the sheet-shaped reinforcing fiber layer 20. In addition, in the keytop decorating process, a UV coating process may be performed so as to prevent damage, discolorization, and deterioration of the reinforcing fiber layer 20.

When the keytop decorating process is completed, a process of cutting the decorated keytop sheet 3 to separate the individual keytop 1 proceeds (see FIG. 7(h)). As described above, in a case where the keytops 1 in the keytop sheet 3 can be assembled into the push button switch to be used, the manufacturing of keytops are completed at the keytop decorating process (see FIG. 7(g)).

### [Keytop Separating Process]

In a case where a plurality of individually separated keytops 1 are manufactured, as shown in FIG. 7(h), the decorated keytop sheet 3 is transferred to a punching device 50 by a conveyer or the like (not shown). The punching device 50 cuts the connection portions 11b of each of the keytops 1 (see FIG. 5) and the corresponding portions of the reinforcing fiber layer 20 at once so as to separate into the individual keytop 1 from the keytop sheet 3 as shown in FIG. 7(i) (Step S19 of FIG.6). In this manner, one set of the keytops 1 which is assembled into the push button switch of a mobile phone is completed.

### <Effect>

Similarly to the first embodiment, in the keytops 1 or the keytop sheet 3 according to the second embodiment of the present invention, the keytop body 10 can be reinforced with the reinforcing fiber layer 20, so that it is possible to implement thin keytops and a thin keytop sheet.

In addition, similarly to the first embodiment, since the reinforcing fiber layer 20 is provided in the externally-visible state on the keytop body 10, the keytops 1 or the keytop sheet 3 can be provided with texture of a fabric which is very different from those of a conventional printing or painting, so that it is possible to improve a design of the keytops 1 or the keytop sheet 3.

In addition, similarly to the first embodiment, in the embodiment of the keytop sheet 3, the plurality of keytops 1 are simultaneously formed in a predetermined layout in advance, and after that, the plurality of keytops 1 can be treated integrally in the following processes (Steps S14 to S19 of FIG. 6). Therefore, it is possible to efficiently manufacture the keytops 1 and assemble the keytops into the push button switch.

Meanwhile, according to the method of manufacturing the keytop 1 of the second embodiment of the present invention, since the keytop sheet 3 including the plurality of keytops 1 can be pressed (Step S13), a series of processes such as a process of laminating the sheet-shaped resin sheet 11 and the sheet-shaped reinforcing fiber layer 20 (Step S11), a process of heating the resin sheet 11 (Step S12), a pressing process (Step S13), a process of decorating each of the keytops 1 (Step S18), and a process of separating each of the keytops 1 (Step S19) can be consecutively performed in a production line, so that mass production of the keytops 1 or the keytop sheet 3 can be efficiently implemented. In addition, since the pressing process does not require such a high accuracy as that of the injection molding, it is possible to reduce the production cost.

Particularly, in the pressing process for the keytops 1 or the keytop sheet 3, in comparison to the injection molding process according to the first embodiment, fine adjustment for preventing defective filling and occurrence of weld caused from deterioration of fluidity of the softened resin material 10' is not needed, and the keytops 1 and the keytop sheet 3 having a desired shape accuracy and dimensional accuracy can be easily and stably manufactured.

In the second embodiment, the resin sheet 11 and the reinforcing fiber layer 20 are separately supplied in the laminating process (see Step S11 and FIG. 7(a)), but the present invention is not limited thereto. For example, a complex sheet member laminated and fixed the resin sheet 11 and the reinforcing fiber layer 20 with an adhesive may be prepared and supplied to the downstream of the manufacturing apparatus.

### <<Third Embodiment>>

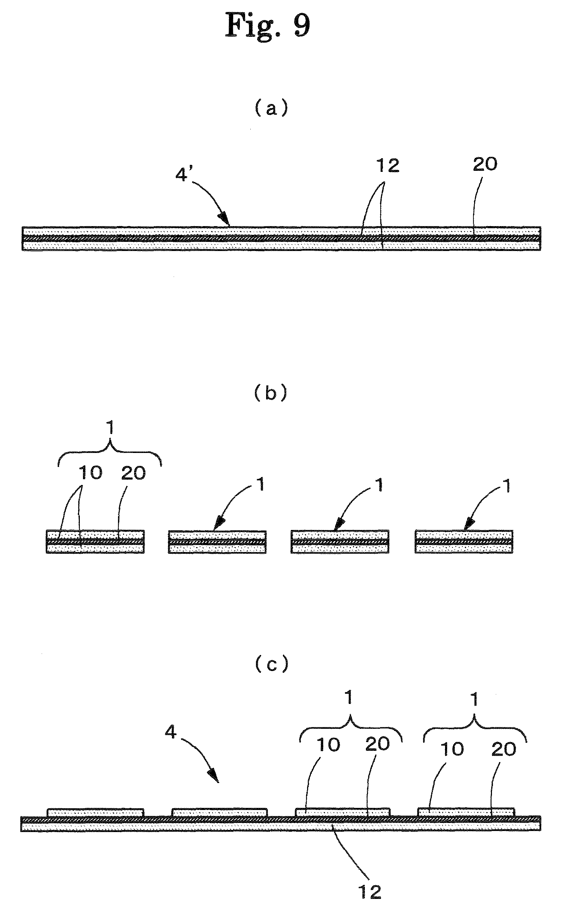

In the next place, a keytop and a method of manufacturing the keytop according to a third embodiment of the present invention are described with reference to FIGS. 9(a) to 9(c). FIG. 9 is a view illustrating keytops and a method of manufacturing the keytop according to the third embodiment, in which FIG. 9(a) is a cross-sectional view illustrating a sheet-shaped member in which a resin material is coated on or impregnated in a reinforcing fiber layer, FIG. 9 (b) is a cross-sectional view illustrating a plurality of keytops obtained by performing a punching process on the resin sheet member of FIG. 9(a), and FIG. 9(c) is a cross-sectional view illustrating a keytop sheet obtained by performing a pressing process on the resin sheet member of FIG. 9(a).

A resin sheet member 4' shown in FIG. 9(a) is used for forming keytops 1 or a keytop sheet 4 according to the embodiment (see FIGS. 9(b) and 9(c)). The resin sheet member is obtained by coating or impregnating a resin material 12 such as a UV-cured resin on both surfaces of a sheet-shaped reinforcing fiber layer 20.

The resin sheet member 4' is decorated by using, for example, the aforementioned surface printing device 40 (see FIG. 7(f)), and is punched by the punching device 50 (see FIG. 7(h)). As a result, as shown in FIG. 9(b), a plurality of keytops 1 can be formed. In each of the produced keytops 1, the reinforcing fiber layer 20 is inserted into an inner portion of the keytop body 10 which is formed by the punching process.

The sheet-shaped member 4' shown in FIG. 9(a) may be pressed by the aforementioned upper and lower pressing dies 81 and 82 (see FIG. 7(c)), so that as shown in FIG. 9(c)), a keytop sheet 4 in which the plurality of keytops 1 are integrated may be formed. Subsequently, the slits are punched around the sides of each of the keytop 1 of the keytop sheet by using the punching device 90 (see FIG. 7(e)), and the keytops 1 are decorated by the surface printing device 40 (see FIG. 7(f)), so that the keytop sheet 4 having a constitution substantially the same as that of the keytop sheet 3 shown in FIG. 5 (a) can be manufactured. In addition, the keytop sheet 4 may be punched by the punching device 90 (see FIG. 7(h)) so as to separate the plurality of keytops 1.

Similarly to the first and second embodiments, in the keytops 1 or the keytop sheet 4 according to the third embodiment of the present invention, the keytop body 10 can be reinforced with the reinforcing fiber layer 20, so that it is possible to implement thin keytops and a thin keytop sheet.

Similarly to the first and second embodiments, since the reinforcing fiber layer 20 is provided in the externally-visible state on the keytop body 10, the keytops 1 or the keytop sheet 4 can be provided with texture of a fabric which is very different from those of a conventional printing or painting, so that it is possible to improve a design of the keytops 1 or the keytop sheet 4.

In addition, similarly to the first and second embodiments, in an embodiment of the keytop sheet 4, the plurality of keytops 1 are simultaneously molded in a predetermined layout in advance, and after that, the plurality of keytops 1 can be treated integrally in the following processes. Therefore, it is possible to efficiently manufacture the keytops 1 and assemble push button switch.

In addition, similarly to the second embodiment, since the keytops 1 or the keytop sheet 4 can be manufactured by the punching process or the pressing process, a series of processes in a production line can be consecutively performed, so that mass production of the keytops 1 or the keytop sheet 4 can be efficiently implemented. In addition, since the pressing process does not require such a high accuracy as that of the injection molding, it is possible to reduce the production cost.

### [Reference Numerals]

- 1:: keytop
- 1a:: display
- 2,: 3, 4: keytop sheet
- 4':: sheet-shaped member
- 10:: keytop body
- 10':: resin material
- 11:: resin sheet
- 11a:: slit
- 11b:: connection portion
- 101:: keytop body group
- 20:: reinforcing fiber layer
- 31:: upper mold
- 32:: lower mold
- 40:: surface printing device
- 50,: 90: punching device
- 60:: transfer roller
- 70:: heating device
- 81:: upper pressing die
- 82:: lower pressing die

## Claims

1. A keytop used for a push button switch of a portable electronic apparatus, wherein a reinforcing fiber layer is provided in an externally-visible state on at least one of a top surface, a back surface and an inner portion of a keytop body made of a resin material.

2. The keytop according to Claim 1, wherein the plurality of keytop bodies are arranged in a predetermined layout on the reinforcing fiber layer having a sheet shape.

3. The keytop according to Claim 1,
wherein a keytop body group is constituted by integrally arranging the plurality of keytop bodies in a predetermined layout on a flexible resin sheet, and the reinforcing fiber layer having a sheet shape is formed on the keytop body group.

4. The keytop according to any one of Claims 1 to 3,
wherein the keytop bodies or the keytop body group and the reinforcing fiber layer have a translucency.

5. The keytop according to any one of Claims 1 to 4,
wherein a pattern is printed on the reinforcing fiber layer.

6. A method of manufacturing the keytop according to any one of Claims 1 to 5, comprising:
a step of arranging the reinforcing fiber layer having a sheet shape in a mold cavity; and
a step of injecting a resin material having a fluidity in the mold cavity and molding the keytop bodies or the keytop body group in a state that the reinforcing fiber layer is attached thereto.

7. A method of manufacturing the keytop according to any one of Claims 1 to 5, comprising:
a step of providing a resin material having a sheet shape and the reinforcing fiber layer having a sheet shape in a laminated state;
a step of heating at least one of the laminating material of the resin material and the reinforcing fiber layer and a mold at a predetermined temperature; and
a step of pressing the laminating material of the resin material and the reinforcing fiber layer with the mold and molding the keytop bodies or the keytop body group in a state that the reinforcing fiber layer is attached thereto.

8. A method of manufacturing the keytop according to any one of Claims 1 to 5, comprising:
a step of coating or impregnating a resin material with a predetermined thickness on the reinforcing fiber layer having a sheet shape;
a step of curing the resin material to form a resin sheet member that is integrated into the reinforcing fiber layer; and
a step of pressing the resin sheet member with a mold and molding the keytop bodies or the keytop body group.

9. The method according to any one of Claims 6 to 8, comprising a step of separating the keytop body group which is attached or integrated into the reinforcing fiber layer into the individual keytop body to obtain the plurality of keytops.
